# EUROPEAN PATENT APPLICATION

(11) **EP 3 792 205 A1**
(43) Date of publication of application: **17.03.2021**
(21) Application number: 19196819.7
(22) Date of filing: 11.09.2019
(51) Int. Cl.: B65G 11/02, B65G 11/20, B65G 67/06, B65G 69/18

(54) **DEVICE FOR UNLOADING PARTICULATE MATERIAL FROM SILOS INTO MOBILE CONTAINERS**

(71) Applicant: Katoen Natie Bulk Terminals, 9130 Kallo (BE)
(72) Inventor: Boschmans, Peter Jean Ludo, 2900 Schoten (BE)
(74) Representative: Calysta NV

(57) **Abstract**

The invention relates to a device for loading a mobile container with a particulate material stored in a silo comprising a flexible chute comprising an external surface surrounding a hollow body, provided to be in flow communication with an extraction pipe and comprising a collar connected to the distal portion of the chute and being provided to cover the loading opening provided on said mobile container, to a system comprising the device and a method for unloading the silo.

## Description

### Technical Domain

The present invention relates to the extraction of goods from silos or fixed vertical container to smaller mobile containers. In particular the present invention concerns a device for increasing safety of the unloading of a silo into a mobile container while lowering the amount of goods spilled during this process.

### Technological Background of the invention

The invention relates to particulate materials being stored and preserved in extra-large silo's (± 300m³) for delivery to a final customer, especially to the discharge of granular materials from these silos. The discharge or extraction of those materials from silos and other types of vertical containers is a common practice for many industrial logistic providers.

These logistic providers have certain higher level organizations and campaigns trying to improve the safety, efficiency and quality of their work, but also regarding environmental and social impact on the transportation of goods. The ECTA (European Chemical Transport Association) is an example of such an organization, trying to unite these logistic providers and to improve their way of working. Another example is Operation clean sweep, a campaign which encourages logistic providers handling plastic resins, to implement techniques and practices to work towards zero pellet, flake and powder loss. As these losses would end up in waterways, which would finally lead to the ocean and harm the animals and plants living in there.

Industrial logistic providers perform those extractions of materials stored and preserved in silos on a very regular basis, by making use of gravity discharge or by using pumps. This often requires the mobile container to be positioned straight underneath the silo, as most of these silos have an extraction outlet located at the bottom part. This discharge process has a specific flow rate by type of material and dimension of this extraction outlet, describing the amount of material leaving the silo during a specified period of time. To make sure that the right amount of material leaves the silo and ends up in the mobile container, this process is often timed manually or in case of more expensive systems, electronically by the pump or the unloading system itself. This timing has to be done with care, as a sufficient amount of material needs to be loaded to fit the needs of the client, although avoiding overloading the mobile container and thus spilling of material at the same time. In some cases, an amount of goods is already present in the mobile container, which has to be taken into account.

Industrial logistic providers typically have to store a variety of materials, each being stored in one or more silo(s). Different silos are then used to store these variety of materials, and the number of extraction mechanisms available in the plant of the industrial provider may be less than one extraction mechanism attributed to one single silo. This means that extraction mechanisms have to be connected to one silo and afterwards to another silo, and often cleaned between different extractions, especially when the next silo to be connected contains a different kind of material to avoid that a residue causes pollution of new mobile containers to be loaded with a different kind of material. The extraction outlet located at the bottom end of the silo, can be used to discharge the granular material directly, or to connect an additional extraction pipe and prolong the extraction outlet. Some industrial logistic providers use a multi floor solution with at least 2 floors, the ground level (ground floor) being accessible for mobile container carriers, such as trucks, trains or even boats. The first level (first floor) used for supporting these silo's and facilitating the process for the operator located at the first floor performing the discharge of the materials stored in the container, as they can access the extraction outlet of the silo more easily, and are already above the loading opening available on the mobile container itself. Such multi-floor solutions require an extraction pipe to provide a connection between the extraction outlet of the silo and the loading opening in the mobile container. These extraction pipes should be easy to connect to the silo, easily cleaned and should allow monitoring of the current level of granular material already loaded in the mobile container.

Currently, there are several automated telescopic loading bellows on the market, which are provided with an automatic level detection system. These allow to automatically stop the loading process when the desired level in the mobile container to be filled has been reached. They do however occupy a lot of space which means they are less desired in multi-floor loading solutions, require a lot of working force when they need to be disconnected from a silo, involve a labor intensive cleaning process and are rather expensive.

Further, when the particulate material is from synthetic origin, such as plastic or polymer beads, logistic providers face the challenge to and show the willingness to work according to the rules put in place by organizations/campaigns for protecting the environment and for keeping plastic beads out of the ocean without making the operation of a loading system a labor intensive and complex process. There is thus a need for an "easy to operate", affordable and safe discharge system which can be used to unload the material from these silo's into mobile containers.

### Brief summary of the invention

It is foreseen according to the present invention a device provided for loading a mobile container with particulate materials from a silo, said silo comprising a vessel designed to contain said particulate material, an outlet opening at the bottom of said silo for extracting said particulate material, and to which an extraction pipe is provided to be connected and through which said particulate material is susceptible to leave the silo by means of gravity to enter the mobile container, said mobile container being provided with a loading opening provided in a top portion of said mobile container, the device according to the invention further comprises a flexible chute comprising an external wall surrounding a hollow body, provided to be connected to a distal portion of said extraction pipe with mutual locking means, said flexible chute comprising a proximal portion and a distal portion, said proximal portion of said flexible chute being provided to surround said distal portion of said extraction pipe, said distal portion extending from said proximal portion and being terminated by a free end of said flexible chute, said chute comprising a collar connected to the distal portion of the chute and being provided to cover the loading opening on said mobile container.

As it can be seen, the device according to the present invention allows an "easy-to-operate" and safe system. Indeed, as it will become apparent from the following explanation, the flexible chute allows to increase the safety of the discharge process of the silo to the mobile container while being easy to connect and to disconnect to the pipe present on the silo or even directly to the silo. Further, the distal portion, comprising the collar connected to the distal portion allows to cover said loading opening on the mobile container avoiding said particulate material to be spilled and to end up in the environment.

During this loading process, the mobile container will be positioned straight underneath the extraction outlet of the silo. Afterwards, the person performing the loading process will open the loading hole of the mobile container which can be done directly from the loading floor through the pass-through hole, by means of a hook or by means of a ladder in case no loading floor is available. He will then move the extraction pipe to a position where said extraction pipe is straight between the extraction outlet of the silo and the loading hole. The top end of the extraction pipe will then be connected to the outlet opening of the silo to allow the particulate material in the silo to flow through the extraction pipe and the loading hole, into the mobile container. The bottom part of the extraction pipe will be connected to the device according to the invention. After lowering the extraction pipe, the device according to the invention will be on top of the loading hole of the mobile container, or (for a small portion) inside the loading hole. Any particulate material that would get deflected upwards due to reflection on the bottom part off the mobile container, will bounce off the collar and stay in the mobile container instead of leaving the mobile container and ending up in the environment. As the material has reached the desired level in the mobile container, the outlet valve of the silo will be closed stopping the loading process. As most of the mobile containers have multiple loading holes to facilitate the spreading of the material, this loading process might have to be repeated several times. In this case, the extraction pipe with the device according to the invention will be removed from loading hole of the mobile container the mobile container, so the mobile container can reposition itself, aligning the next loading hole with the extraction outlet of the silo to proceed the loading process. After the mobile container has been loaded with the desired amount of particulate material, the extraction pipe together with the device will be removed from the loading hole and disconnected from the outlet valve of the silo.

After filling the mobile container completely, the mobile container will leave the loading floor and will be delivered to the client. In the meantime the extraction pipe will be completely removed from the silo and the device according to the invention will be detached from the extraction pipe. This allows intensive cleaning of both components independently. As the both the flexible chute and the collar from the device according to the invention are made of food approved (FDA or food compatible) Polyurethane they can be easily and quickly cleaned to prepare them for the next loading process.

The collar provided at the distal portion of the chutes is provided for covering the loading opening of the mobile container, which will avoid spilling of particulate materials during the loading process. If for any reason, the operator of the mobile container accidently moves the mobile container during the loading process, it will be the device according to the invention that will absorb the forces and bend or tear apart due to the flexibility of said chute instead of the extraction pipe. If the forces would be applied to the extraction pipe, this could cause damage to the extraction pipe, the silo to which it is connected and create a dangerous situation for both the person performing the loading process and the person transporting the mobile container.

In a preferred embodiment, the collar is a collar made in a transparent material, such as food approved transparent polyurethane. Accordingly, the person performing the loading process from the intermediate floor, will be able to watch through the transparent collar of the flexible chute, to monitor the actual level of granular material already inside the mobile container and avoid to overfill the mobile container - thus spilling material - or avoid to stop the loading process too early leaving the mobile container insufficiently filled.

By the terms "particulate material", it is meant, within the scope of the present invention, any material from any origin, such as chemical, biological, mineral, agricultural material under the form of a powder, grains, granular or pebble form and having a mean particle size from some nanometers such as 10 nm to 10 cm or more.

Advantageously, said particulate material is a granular material having a mean particle size d50 comprised between 0,1 mm and 6 mm. This range of particle sizes of the particulate material allow a loading process by means of gravity, without implying a more expensive pumping installation.

Preferably, said mobile container is a bulk container or a tank container being transported by means of a truck or a train. This truck or train carefully positioning the loading opening right beneath the outlet opening of said silo and transporting the goods towards a client after the loading process has been completed.

In a particular embodiment according to the current invention, said flow communication is provided by mutual locking means, provided to connect said flexible chute with said extraction pipe, at the distal portion of the extraction pipe. These mutual locking means will avoid unwanted decoupling of said extraction pipe and the device according to the invention.

In a preferred embodiment to the according invention, said locking means comprises a first male locking means provided to be positioned on an external surface of said extraction pipe and a female locking means comprising a traversing orifice through said wall of said flexible chute, provided to accommodate said male locking means. Said locking means will simplify the connection process of said device with said extraction pipe. Meaning that the disassembly will be performed without too much complexity, although allowing a sufficiently rigid connection between the extraction pipe and the device. These locking means provide an easy to clean solution, as cleaning has to be performed very often to avoid pollution. The locking means allowing also a connection between the device according to the invention with different kind of extraction pipes, and facilitate the process of moving the extraction pipe between different loading holes, as they can now be moved as being one sole entity.

Advantageously, said chute has a substantially cylindric shape wherein said collar mounted on the chute has a substantially annular shape having an inner circle wherein the chute is accommodated. As most of the loading inlets mobile containers have a circular shape, this will further simplify the set up before the start of the loading process and provide a better coverage of the loading hole during said process, avoiding openings between the collar and the loading opening.

In a particular embodiment according to the current invention, said collar mounted on the chute has a substantially conical shape, preferably truncated conical shape and being preferably partially made of a transparent material, such as comprising windows or being entirely transparent. This allows the person performing the loading process to monitor the current level of material already inside the mobile container. As most of these mobile containers have multiple loading holes to facilitate the spreading of the material to be loaded, it becomes more difficult to determine how much material can be loaded in every single loading hole. Being able to monitor the current level of material present in the mobile container will thus avoid the use of a timer or expensive digital measuring tools, while still avoiding materials to be spilled during the process.

Preferably, said collar is made of a flexible food approved material, more preferably of food approved polyurethane.

In a preferred embodiment, said surface of said flexible chute is made of a food approved polyurethane. These materials have elastic characteristics, avoiding that a sudden move of the mobile container due to for example: a communication issue between the person providing the loading and the person moving the mobile container, will cause the extraction pipe or even worse the silo itself to take damage. Instead, the least expensive part of the system will bend or tear, being the device itself.

In a preferred embodiment to the according invention, said chute comprises a lip extending outwards from the external face of the external wall to which said terminal collar is connected, preferably welded or pasted to the chute, said lip being preferably located between 0 and 15 cm, more preferably between 5 and 13 cm, and most preferably between 8 and 10 cm from the free end of the second portion provided to be in contact with the loading opening provided on said mobile container. Said lip allowing a rigid connection between both the chute and the collar, so the device can withstand daily wear and can be reused many times. The part of the chute beneath the lip will be brought inside the loading hole during the loading process.

Other embodiments of the device according to the present invention are mentioned in the appended claims. The present invention further relates to a storage and loading system comprising:
a) at least one loading platform extending horizontally, said loading platform being provided to be located below an outlet opening of at least one silo, preferably a vertical silo, said outlet opening being provided to be connected to a loading inlet on a mobile container positioned underneath said loading platform, said loading platform further comprising at least one loading hole, provided for allowing access to said mobile container positioned beneath said loading platform,
b) at least one extraction pipe, having a top end provided to be connected to said outlet opening of said silo, and
d) at least one device according to the invention.

It is foreseen according to the present invention a system comprising a loading platform provided with a least one silo containing a particulate material which is to be unloaded from the silo into a mobile container. As explained here before, the silo comprises a vessel containing the particulate material, an outlet opening at the bottom of said silo for extracting said particulate material, and an extraction pipe connected to and prolonging the outlet opening.

When the mobile container is to be loaded with particulate material, it reaches its loading position, underneath the loading platform. Said loading platform allowing mobile containers to pass beneath it, simplifying the positioning straight beneath the outlet opening of the silo, avoiding to pay attention for the system carrying the silo. Said loading platform further facilitating access to the silos itself for the person who has to perform the loading process.

The loading opening provided in a top portion of the mobile container faces the outlet opening of the silo. The loading platform has a pass-through hole. The pass-through, the loading opening and the outlet opening are aligned when the mobile container is in its loading position. Said extraction pipe allowing a solid connection between the outlet opening from the silo and the loading hole of said mobile container.

The system also comprises a device according to the present invention, which latter comprising a flexible chute having an external wall surrounding a hollow body, provided to be connected to a distal portion of said extraction pipe with mutual locking means, said flexible chute comprising a proximal portion and a distal portion, said proximal portion of said flexible chute being provided to surround said distal portion of said extraction pipe, said distal portion extending from said proximal portion and being terminated by a free end of said flexible chute, said chute comprising a collar connected to the distal portion of the chute and being provided to cover the loading opening on said mobile container.

The system according to the present invention is "easy-to-operate" and safe. In the system according to the present invention, the flexible chute connected to the extraction pipe, forming an assembly passing through the loading hole of the loading platform. The three principal elements are easy to connect and disconnect while the collar connected to the distal portion allows the covering said loading opening on the mobile container to avoid said particulate material to be spilled and to end up in the environment.

The person performing the loading process is typically positioned on the loading platform and will be able to watch through the transparent collar of the flexible chute, to monitor the actual level of particulate material already inside the mobile container and avoid to overfill the mobile container - thus spilling material - or avoid to stop the filling process too leaving the mobile container insufficiently filled. Any material that would get deflected upwards due to the impact on the mobile container, will bounce back off the collar and stay in the mobile container, instead of leaving the mobile container and ending up in the environment. When the material has reached the desired level, the outlet valve of the silo will be closed. As most of the mobile containers have multiple loading holes to facilitate the spreading of the material, this loading process might have to be repeated several times. In this case, the extraction pipe with the device according to the invention will be removed from loading hole of the mobile container the mobile container, so the mobile container can reposition itself, aligning the next loading hole with the extraction outlet of the silo to proceed the loading process. After the mobile container has been loaded with the desired amount of particulate material, the extraction pipe together with the device will be removed from the loading hole and disconnected from the outlet valve of the silo.

If for any reason, the operator of the mobile container accidently moves the mobile container when the extraction pipe is still connected to the silo and goods are being loaded into the mobile container, thanks to the presence of a flexible chute, it will be the device according to the invention that will absorb the forces and bend or tear apart. If the forces would be applied to the extraction pipe, this would mean huge damage to the silo and possible danger for the person performing the loading process as well, which could be very harmful for the operator or expensive damages for the industrial logistic provider..

After filling the mobile container completely, the mobile container will leave the loading floor and will be delivered to the client. In the meantime the extraction pipe will be completely removed from the silo and the device according to the invention will be removed from the extraction pipe. This facilitates the intensive cleaning of both components to prepare them for the next loading process.

In a preferred embodiment, the extraction pipe is a telescopic extraction pipe having an extended position and a retracted position. These 2 positions will make it more easy for the person performing the loading process to put the extraction pipe in the correct position.

Advantageously, said system further comprising a loading cart, said loading cart comprising a staircase, an elevated cart platform and a wheelbase, said loading cart being provided to be located on said loading platform and move thereon and to further allow access to the outlet opening of said silo, said loading cart further being provided to carry and transport said extraction pipe to different positions on said loading platform. Avoiding to carry and reposition said extraction pipe by hand and further stabilizing it's position during connection between said silo and said loading hole.

In a further variation, the system comprises a loading cart, said loading cart comprising a staircase, said loading platform and a wheelbase, said loading cart being provided to allow access to the outlet opening of said silo, said loading cart further being provided to carry and transport said extraction pipe to different positions above the loading inlet on said mobile container

Preferably, said mobile container is a bulk container or a tank container being transported by a truck or a train, said mobile container being provided with a loading inlet, said loading hole being positioned straight under one of the at least one pass-through in said loading platform.

More advantageously, said pass-through hole comprises a lip extending vertically upwards from said pass-through hole, said lip preferably having a height between 0 and 30 cm, more preferably between 15 and 25 cm. Said lip avoiding any material residues which present on the floor of said loading platform to end up on the bottom floor or inside the mobile container, thus causing spilling. This lip having the same form as the pass-through hole, or another form which embraces the pass-through hole.

The present invention also relates to Other embodiments of the system according to the present invention are mentioned in the appended claims

Other characteristics and advantages of the present invention will be derived from the non-limitative following description, and by making reference to the drawings and the examples.

### Drawings.-

Figure 1 is a representation of the device according to the present invention when attached to an extraction pipe.
Figure 2 gives an example of when the flexible chute is attached to the end portion of an extraction pipe **3** during a loading process.
Figure 3 shows some of the possible variations of the system according to the invention.
Figure 4 shows the locking means used in a preferred embodiment.

In the drawings, the same reference numbers have been allocated to the same or analog element

### Detailed description of the invention

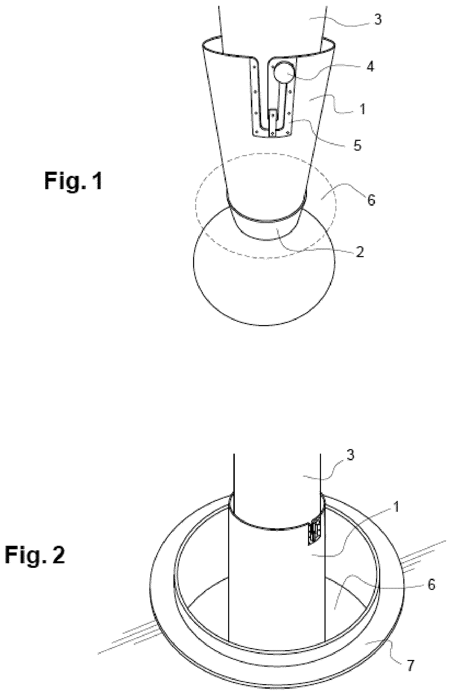

As it can be seen in figure 1, the device according to the present invention comprises a flexible chute made in a material such as food approved polyurethane. The flexible chute comprises a surface surrounding a hollow body **1**, a flexible collar **2** connected to the end portion of said flexible chute. Said flexible collar made out of a material food approved material such as food approved polyurethane.

The device is connected to an extraction pipe **3**, comprising a male locking mean **4** (I.e. a pin welded to the extraction pipe) which is inserted in the female locking mean **5** being attached on said surface surrounding a hollow body. The horizontal part of the U shaped opening being closed of by a vertical metal plate being fixated with screws, assuring a solid connection between said device and said extraction pipe. Due to the vertical space provided in the U shaped opening provided in said female locking means **5**, the male locking means is allowed to move in a vertical direction, allowing the device according to the invention to follow the vertical level of the goods loaded into a mobile container during the loading process. The extraction pipe with the device according to the present invention attached, will then be introduced through the pass-through hole **6** provided in the loading floor of the multi-floor loading setup. When the loading process is completed, this pass-through hole will can be covered with a lid.

Figure 2 shows an example of when the flexible chute is attached to the end portion of an extraction pipe **3** during a loading process. The lid is now removed from the pass-through hole and the extraction pipe together with the connected device has been put through said pass-through hole **6**. The top portion of the extraction pipe is connected to a silo, and a loading hole from a mobile container will be aligned with the pass-through hole of the loading floor. Said loading hole will then be opened and the bottom portion of the device according to the invention will be introduced in said loading hole. The flexible collar will then make sure no material can be reflected upwards in the mobile container, avoiding these goods to end up in the environment. Due to the flexible collar being transparent, the person performing the loading process on the loading floor, is able to monitor the level off particulate material in the mobile container and terminate the loading process at the right time. To further avoid that any residue material on the loading floor of said multi-floor loading setup ends up in the mobile container positioned right beneath the pass-through hole **6**, a metal collar **7** has been put around the pass-through hole, this collar can be of any shape, as long as it encapsulates the pass-through hole.

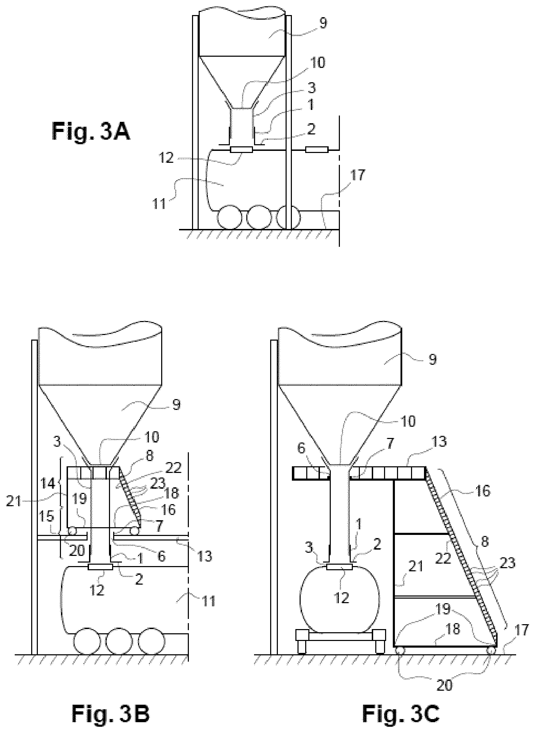

Figure 3A shows a schematic representation of a mobile container **11** positioned straight underneath the silo, both the outlet opening **10** of the silo and the loading hole **12** of the mobile container **11** being aligned along the vertical axis. The extraction pipe **3** being connected to the outlet opening **10** of the silo **9**. The flexible chute comprising a hollow body **1** and a flexible collar **2**, being in flow communication with the end portion of said extraction pipe covering the loading hole **12** of the mobile container **11**.

Figure 3B shows a schematic representation of a mobile container being loaded using the multi-floor system. The loading cart **8** being positioned on the loading platform **12** extending horizontally, said loading platform being provided to facilitate access to both the loading hole of the mobile container and the loading outlet of the silo. The loading platform comprising at least one pass-through hole **6** through which access to the loading hole of the mobile container will be provided. The loading hole of the mobile container can then be opened directly from the loading platform, by means of a hook for example. The loading cart **8** is supported by a wheelbase **18**. The wheelbase **18** comprises a frame having at least four legs **19** and wheels **20** at the intersection of the legs **19** for allowing proper displacement of the loading cart **8** on the loading floor **13**. As it can be seen in figure 3B, the preferred loading cart **8** is provided to carry and transport said extraction pipe **3** to different positions on said loading platform **13**. The extraction pipe **3** is in flow communication with the device according the invention comprising a flexible chute **1** surrounding a hollow space and a flexible, preferably transparent, collar **2.** The assembly of a loading cart **8** and the extraction pipe **3** is very convenient when the same extraction pipe has to be used for different silo's. Indeed, as explained previously, typically, several different silo's are positioned on the loading floor, containing different types of material. In such a case, it is very convenient to move the extraction pipe around on the loading floor to unload different types of materials into different mobile containers positioned on the ground floor. As these extraction pipes are heavy and quite big to carry by a human person, having it connected to and carried by the loading card significantly simplifies the moving and unloading process. This allows the same extraction pipe, device according to the invention and loading cart to be used for unloading more than one container, avoiding the need to buy one system by silo. The mobile container **11** itself is free to move on the ground floor, to position each of its loading holes directly underneath the pass-through hole and silo outlet.

Figure 3C shows a schematic representation of the system when the loading cart **8** comprises the loading floor. As it can be seen, the loading cart **8** comprises a staircase **17** allowing the operator to climb from the ground floor **18** on which the mobile container **11** is positioned to the loading platform **13**. on the ground floor **18**. The loading cart is positioned on the ground floor in this case.

When the truck carrying the mobile container **11** is in it's loading position, the mobile container is underneath the loading platform **13**. The silo **9** has an outlet opening **10** and when in its loading position, in the system, the outlet opening of the silo **10**, the loading hole of the platform **6** and the loading hole **12** of the mobile container **11** are almost aligned along a vertical axis to allow discharging the particulate material from the silo **9** in the mobile container **11**.

The extraction pipe **3** has a proximal portion **14** connected, in the loading position of the mobile container **11**, to the outlet opening **10** of the silo **9**.

By the wording "proximal portion connected to the outlet opening, it is meant that there is a flow communication between the extraction pipe and the inside of the silo. It is possible in some examples to have a physical connexion where the extraction pipe is made solidary with the silo, for example by securing, by clipping or by screwing, but it is also possible to simply locating the extraction pipe, provided with a hopper, below the outlet opening of the silo, without contact, but allowing the particulate material to flow from the silo inside the extraction pipe, by gravity, when the outlet opening of the silo is open.

The distal portion **15** of the extraction pipe **3** is provided with coupling means **4** in a preferred embodiment. The flexible chute **1** is provided with mutual coupling means **5**. The distal portion **15** of the extraction pipe **3** is connected to the flexible chute **1** by connexion between the mutual coupling means **5** and the coupling means **4**.

Preferably, the extraction pipe **3** is a telescopic extraction pipe having an extended position and a retracted position. When the mobile container is located in its loading position, the extraction pipe ref is deployed in its extended position to install a flow communication between the silo **9** to which it is connected and the loading hole **12** of the mobile container **11** by means of the flexible chute **1**.

In a preferred loading cart **6** in the system according to the present invention, the horizontal section defined by virtually binding the four wheels **20** together is higher than the horizontal section (i.e. the surface of the loading platform) of the loading platform **13** to increase the stability of the loading cart **8**.

In another embodiment (not shown), the horizontal section defined by virtually binding the four wheels together is equivalent to the horizontal section (i.e. the surface of the platform) of the platform.

The frame comprises typically at least two vertical legs **21** and two inclined legs **22**. The two inclined legs **22** are connected together by means of horizontal steps **23** forming the staircase of the loading cart **ref**. Further, the loading hole **6** comprises a lip **7** extending upwards from said loading hole **6**, said lip **7** preferably having a height between 0 and 30 cm, more preferably between 15 and 25 cm. The loading cart **8** of the system according to the present invention is not only facilitating the transport of said extraction pipe, but also providing better access to a silo **9**. The proximal portion **14** of the extraction pipe **3** being either positioned straight underneath or connected to the outlet valve of a silo **9**, said silo comprising particulate materials to be unloaded and transported further to clients. when the mobile container **10** is positioned straight underneath the loading platform, with the loading opening **11** comprised by said mobile container **11** positioned straight beneath the loading hole **12** through which the extraction pipe **3** has been put, the particulate materials in the silo **9** will thus pass through the outlet opening **10**, extraction pipe **3**, the device according the invention, the loading inlet **12** provided in said mobile container **11** and will finally end up in the mobile container **11**. This extraction can be done either by gravity or by means of a pump.

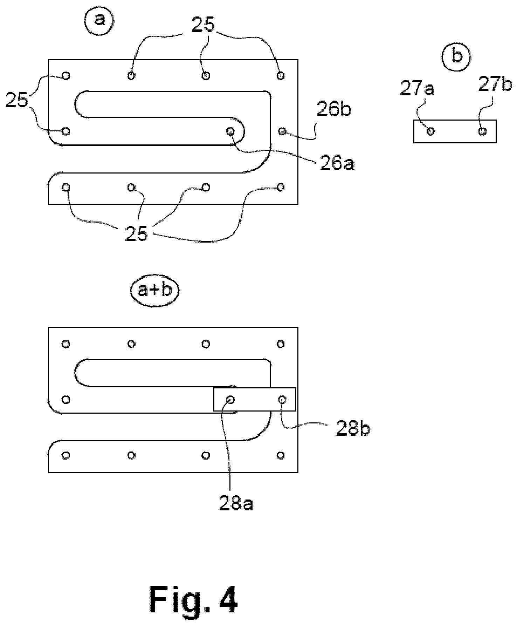

In figure 4, (a) shows the female locking means to be attached on a preferred embodiment of the device according to the invention. The female locking means consist of a metal played with an cut-out U shape. Said female locking means to be connected by screws through the fixation holes **25**, to either the flexible chute or the extraction pipe while the male locking means - being preferably a metal pin with a flat head with a dimension higher than the largest dimension of said U shaped cut-out - is connected by means of welding or glue to the other part. the male locking means are to be shoved inside this U shaped extrusion. Connection can be fixed by means of an extra metallic component connected between the two holes **26a** and **26b**. Said metallic component, being shown on figure 4 (b) being screwed on the female locking means by assembling screws through hole **27a** and **27b** and blocking the horizontal part of the u shape cut-out. This allows the male locking means to move along the vertical axis and the device according to the invention to move along with the increasing volume level in the mobile container. If the mobile container makes a sudden move, due to miscommunication for example, the locking means allows the device according the invention to make a small rotation as well, ensuring that the device will "pop out" the loading hole avoiding damage to the extraction pipe and the silo.

## Claims

1. Device provided for loading a mobile container with particulate materials from a silo, said silo comprising a vessel designed to contain said particulate material, an outlet opening at the bottom of said silo for extracting said particulate material, to which an extraction pipe is provided to be connected and , through which said particulate material is susceptible to leave the silo by means of gravity to enter the mobile container, said mobile container being provided with a loading opening provided in a top portion of said mobile container, said device comprising a flexible chute comprising an external surface surrounding a hollow body, provided to be in flow communication with said extraction pipe, said flexible chute comprising a proximal portion and a distal portion, said proximal portion of said flexible chute being provided to surround said distal portion of said extraction pipe, said distal portion of the flexible chute extending from said proximal portion of the flexible chute and being terminated by a free end of said flexible chute, said chute comprising a collar connected to the distal portion of the chute and being provided to cover the loading opening provided on said mobile container.

2. Device according to claim 1, wherein said particulate material is a granular material having a mean particle size comprised between 0,1 mm and 6 mm.

3. Device according to claim 1 or claim 2 wherein said mobile container is a bulk container or a tank container being transported by means of a truck or a train.

4. Device according to any of the claims 1 to 3, wherein said flow communication is provided by mutual locking means, provided to connect said flexible chute with said extraction pipe, at the distal portion of the extraction pipe.

5. Device according to claim 4, wherein said mutual locking means comprised a first male locking means provided to be positioned on an external surface of said extraction pipe and a female locking means comprising a traversing orifice through said surface of said flexible chute, provided to accommodate said male locking means.

6. Device according to claim 5, wherein said male locking means is a pin comprising a rod and a collar and wherein said traversing orifice of said female locking means having at least a cross section larger than the cross section of the rod of the pin and smaller than the cross section of the collar of the pin. Said male locking means being provided to be welded on said extraction pipe connected between said silo and said mobile container.

7. Device according to any of the claims 1 to 6, wherein said chute has a substantially cylindric shape and wherein said collar has a substantially annular shape having an inner circle wherein the chute is accommodated.

8. Device according to claim 7, wherein said collar has a substantially conical shape, preferably truncated conical shape and being preferably partially made of a transparent material, such as comprising windows or being entirely transparent.

9. Device according to any of the claims 1 to 8, wherein said collar is made of a material chosen amongst the group of flexible, food approved materials such as food approved polyurethane.

10. Device according to any of the claims 1 to 9, wherein said surface of said flexible chute is made of a material chosen amongst the group of flexible, food approved materials such as food approved polyurethane.

11. Device according to any of the claims 1 to 10, wherein said chute comprises a lip extending outwards from the external face of the external wall to which said terminal collar is connected, preferably welded or pasted to the chute, said lip being preferably located between 0 and 15 cm, more preferably between 5 and 13 cm, and most preferably between 8 and 10 cm from the free end of the second portion provided to be in contact with the loading opening provided on said mobile container.

12. A Storage and loading system comprising:
a) at least one loading platform extending horizontally, said loading platform being provided to be located below an outlet opening of at least one silo, preferably a vertical silo, said outlet opening being provided to be connected to a loading inlet on a mobile container positioned underneath said loading platform, said loading platform further comprising at least one loading hole, provided for allowing access to said mobile container positioned beneath said loading platform,
b) at least one extraction pipe, having a top end provided to be connected to said outlet opening of said silo, and
d) at least one device according to any of the claims 1-11.

13. System according to claim 12, wherein said extraction pipe is a telescopic extraction pipe having an extended position and a retracted position.

14. System according to claim 12, further comprising a loading cart, said loading cart comprising a staircase, an elevated cart platform and a wheelbase, said loading cart being provided to be located on said loading platform and move thereon and to further allow access to the outlet opening of said silo, said loading cart further being provided to carry and transport said extraction pipe to different positions on said loading platform.

15. System according to claim 12, further comprising a loading cart, said loading cart comprising a staircase, said loading platform and a wheelbase, said loading cart being provided to allow access to the outlet opening of said silo, said loading cart further being provided to carry and transport said extraction pipe to different positions above the loading inlet on said mobile container.

16. System according to any of the claims 12 - 15, further comprising a mobile container, preferably transported by a truck or a train, said mobile container being provided with a loading inlet, said loading inlet being positioned straight under one of the at least one loading hole in said loading platform.

17. System according to claim any of the claims 12 to 16, wherein said pass-through hole comprises a lip extending vertically upwards from said pass-through hole, said lip preferably having a height between 0 and 30 cm, more preferably between 15 and 25 cm.

18. Method for unloading a particulate material stored in a silo into a mobile container comprising the steps of
a) Providing a silo comprising a vessel designed to contain said particulate material and an outlet opening at the bottom of said silo for extracting said particulate material
b) Positioning underneath said silo a mobile container, provided with at least one loading opening provided in a top portion of said mobile container in such a way that the loading opening is aligned, preferably vertically, with the outlet opening of the silo.
c) Connecting an extraction pipe to said outlet opening of said silo,
d) Connecting a flexible chute comprising an external surface surrounding a hollow body, in flow communication with said extraction pipe, said flexible chute comprising a proximal portion and a distal portion, said proximal portion of said flexible chute being provided to surround said distal portion of said extraction pipe, said distal portion of the flexible chute extending from said proximal portion of the flexible chute and being terminated by a free end of said flexible chute, said chute comprising a collar connected to the distal portion of the chute and being provided to cover the loading opening provided on said mobile container
e) Unloading said predetermined volume of the particulate material from the silo by allowing the particulate material to leave the silo by means of gravity
f) Closing the outlet opening of said silo
g) Disconnecting the flexible chute from the extraction pipe and,
h) Closing the loading opening of the mobile container.

19. Method for unloading a particulate material stored in a silo into a mobile container according to claim 18, wherein a loading cart comprising said extraction pipe is provided, said method comprising the steps of positioning said cart in such a way that one loading opening the mobile container is aligned, preferably vertically with the outlet opening of the silo.
